# EUROPEAN PATENT APPLICATION

(11) **EP 4 060 776 A1**
(43) Date of publication of application: **21.09.2022**
(21) Application number: 21856923.4
(22) Date of filing: 02.12.2021
(51) Int. Cl.: H01M 8/1004, H01M 4/88

(54) **ELECTRODE ASSEMBLY FOR PROTON EXCHANGE MEMBRANE-FREE FUEL CELL AND PREPARATION METHOD THEREFOR, AND FUEL CELL**

(30) Priority: 20.01.2021 CN 202110059435
(71) Applicant: Jiangsu Huasifei New Energy Technology Co., Ltd., Qiandeng Town Kunshan City, Suzhou City Jiangsu 215300 (CN)
(72) Inventor: PAN, Dadi, Suzhou, Jiangsu 215300 (CN); ZHU, Hua, Suzhou, Jiangsu 215300 (CN); LI, Kaishuai, Suzhou, Jiangsu 215300 (CN)
(74) Representative: Bryn Aarflot AS
(86) International application number: PCT/CN2021/135193
(87) International publication number: WO 2022/156382

(57) **Abstract**

The present disclosure provides an electrode assembly for a fuel cell without a proton exchange membrane, a preparation method thereof, and a fuel cell, and belongs to the technical field of fuel cells. The electrode assembly comprises a polymer electrolyte layer, a negative pole catalyst layer and a positive pole catalyst layer located on two surfaces of the polymer electrolyte layer, and a negative pole diffusion layer located on the negative pole catalyst layer away from the polymer electrolyte layer, and a positive pole diffusion layer located on the positive pole catalyst layer away from the polymer electrolyte layer, wherein the polymer electrolyte layer is grown on the negative pole catalyst layer or/and the positive pole catalyst layer. A material of the polymer electrolyte layer of this electrode assembly only contains a polymer electrolyte, and a separate conventional proton exchange membrane does not need to be provided, thus the problem of swelling of the proton exchange membrane under high temperature conditions is overcome.

## Description

### Cross-reference to Related Application

The present disclosure claims the priority to the Chinese patent application with the filing number 2021100594353, entitled "Electrode Assembly for Fuel Cell without Proton Exchange Membrane, Preparation Method thereof and Fuel Cell" filed on January 20, 2021 with the State Intellectual Property Office of China, the contents of which are incorporated herein by reference in entirety.

### Technical Field

The present disclosure relates to the technical field of fuel cells, in particular to an electrode assembly for a fuel cell without a proton exchange membrane, a preparation method thereof, and a fuel cell.

### Background Art

Fuel cells are typically stacked or assembled by core elements, membrane electrode assemblies, each membrane electrode assembly at least contains a proton exchange membrane, a positive pole, and a negative pole. The working principle of the fuel cells is as follows: hydrogen (or methanol) is supplied to the positive pole, oxygen (or air) is supplied to the negative pole, the hydrogen is ionized on the surface of the positive pole to generate hydrogen ions and electrons, the electrons are conducted to the negative pole through an external load circuit, and the hydrogen ions are transferred to the negative pole through the proton exchange membrane, and react with the oxygen and the electrons at the negative pole to generate water and release heat energy.

The preparation of the membrane electrode assembly generally includes two methods. One method is that a slurry containing a catalyst and an ion exchange polymer is coated on two sides of the proton exchange membrane, respectively, and then is compounded with a gas diffusion layer to form a laminated structure in which a positive pole, the proton exchange membrane, and a negative pole are arranged in sequence; and the other method is that a slurry containing a catalyst and an ion exchange polymer is coated on a gas diffusion layer to obtain a positive pole and a negative pole, and then the positive pole and the negative pole are compounded with the proton exchange membrane to form a laminated structure in which the positive pole, the proton exchange membrane, and the negative pole are arranged in sequence.

The fuel cells formed by the two above methods both use the proton exchange membrane. The proton exchange membrane is easy to swell at high temperatures in use, that is, the ion exchange polymer on membrane substrate (such as PTFE) is decomposed and dissolved, so that the structure of the proton exchange membrane itself is damaged, so that the proton exchange membrane gradually loses its functions, more importantly, the proton exchange membrane and the catalyst layer are separated from each other, then the aging of the fuel cell is accelerated.

In addition, the cost of the membrane electrode assembly accounts about 60% of the whole fuel cell. The proton exchange membrane is one of the most central components of the membrane electrode assembly. Currently, the most common proton exchange membrane is Nafion series membranes from DuPont. The use of the proton exchange membrane restricts the reduction of the overall cost of the fuel cell.

### Summary

An objective of the present disclosure lies in providing an electrode assembly for a fuel cell without a proton exchange membrane, a preparation method thereof, and a fuel cell, wherein a separate conventional proton exchange membrane does not need to be provided, and the purpose of proton exchange can be achieved just by providing on a catalyst layer a polymer electrolyte layer only containing a polymer electrolyte.

In a first aspect, the present disclosure provides an electrode assembly for a fuel cell without a proton exchange membrane, including: a polymer electrolyte layer, a negative pole catalyst layer and a positive pole catalyst layer located on two surfaces of the polymer electrolyte layer, and a negative pole diffusion layer located on the negative pole catalyst layer away from the polymer electrolyte layer, and a positive pole diffusion layer located on the positive pole catalyst layer away from the polymer electrolyte layer, wherein a material of the polymer electrolyte layer only contains polymer electrolyte.

The electrode assembly of the present disclosure does not need to use the conventional proton exchange membrane, which solves from the source the problem of swelling of the proton exchange membrane under high temperature conditions, and reduces the production cost. Moreover, the material of the polymer electrolyte layer only contains a polymer electrolyte, and can withstand high temperatures, and the effect of proton exchange is better.

In a possible embodiment, the polymer electrolyte layer includes at least one of a perfluorosulfonic acid resin, a perfluorocarboxylic acid resin, a sulfonated polyether ether ketone resin, a sulfonated polysulfone resin, and a polybenzimidazole soaked in an acid liquid or an alkali liquid.

In a possible embodiment, the thickness of the polymer electrolyte layer is 1-10 µm; and the thickness of the electrode assembly for a fuel cell is less than 200 µm. The polymer electrolyte layer is relatively thin, and is much thinner than the conventional proton exchange membrane, then the internal resistance of the electrode assembly can be reduced, and the energy density of the electrode assembly can be improved.

In a possible embodiment, the negative pole catalyst layer or/and the positive pole catalyst layer include a polymer electrolyte material and a catalyst active material, and the polymer electrolyte material is consistent with the polymer electrolyte material in the polymer electrolyte layer.

The polymer electrolyte powder having the same material as the polymer electrolyte layer is mixed in the catalyst layer, the electrolyte and catalyst particles form a linked structure, irregular connection and stacking are formed among tiny particles, thus forming microscopic pores, achieving the effects of gas transmission and catalytic reaction, and increasing the contact area between the fuel and the catalyst particles.

In a possible embodiment, a mass ratio of the catalyst active material to the polymer electrolyte material is 1: (0.1-0.5). Optionally, a particle size range of the catalyst active material is 0.1-1 nm, and a particle size range of the polymer electrolyte material is 0.2-5 µm. The porosity of the catalyst layer is 10%-90%.

The porosity of the catalyst layer may be adjusted, so as to increase the contact area between the fuel and the catalyst particles while ensuring the catalytic effect.

In a possible embodiment, the catalyst active material includes a noble metal catalyst or/and a metal oxide catalyst; optionally, the noble metal catalyst includes at least one of a Pt catalyst, a Pt-based composite catalyst, and a Pt/C catalyst; and optionally, the metal oxide catalyst includes at least one of an iridium oxide, a rubidium oxide, and a ruthenium oxide.

In a possible embodiment, a material of the negative pole diffusion layer or/and the positive pole diffusion layer is one selected from the group consisting of carbon fiber paper, carbon fiber woven fabric, carbon black paper, foam metal, and nonwoven fabric. Optionally, the foam metal is one selected from the group consisting of foam nickel, foam copper, foam aluminum, foam zinc, and foam titanium. Optionally, the negative pole diffusion layer and the positive pole diffusion layer are both made of carbon fiber paper.

In a second aspect, the present disclosure provides a fuel cell, including a negative pole gas guide groove, a positive pole gas guide groove, and the above electrode assembly for a fuel cell provided between the negative pole gas guide groove and the positive pole gas guide groove.

In a third aspect, the present disclosure provides a preparation method of the above electrode assembly for a fuel cell, including: forming the positive pole catalyst layer on the positive pole diffusion layer to obtain a positive electrode; forming the negative pole catalyst layer on the negative pole diffusion layer to obtain a negative electrode; and growing the polymer electrolyte layer on the positive pole catalyst layer or/and the negative pole catalyst layer; and compounding the positive electrode and the negative electrode so that the polymer electrolyte layer is located between the positive pole catalyst layer and the negative pole catalyst layer.

With the above method, the electrode assembly that does not need the conventional proton exchange membrane can be prepared, and the prepared polymer electrolyte layer only containing a polymer electrolyte material can meet the requirement of preventing transmission of electrons while allowing the protons to pass through, and can operate under high temperature conditions, then the proton transmission effect is better.

In a possible embodiment, a polymer electrolyte resin layer is formed while forming the positive pole catalyst layer on the positive pole diffusion layer to obtain the positive electrode; or/and a polymer electrolyte resin layer is formed while forming the negative pole catalyst layer on the negative pole diffusion layer to obtain the negative electrode; and the positive electrode and the negative electrode are compounded so that the polymer electrolyte resin layer is located between the positive pole catalyst layer and the negative pole catalyst layer.

The polymer electrolyte resin layer is prepared while preparing the catalyst layer, without a separate proton exchange membrane for preparing the electrode assembly, then the preparation is relatively convenient, and the use of the conventional proton exchange membrane is omitted.

In a possible embodiment, the preparation method of the positive electrode or/and the negative electrode includes: mixing a catalyst active material, a catalyst solvent, and a polymer electrolyte resin to obtain a catalyst slurry; coating the catalyst slurry on a surface of the diffusion layer and curing, so that a catalyst layer close to the diffusion layer and the polymer electrolyte resin layer away from the diffusion layer are formed on the diffusion layer.

When curing the catalyst slurry layer, the catalyst and a part of the polymer electrolyte resin may be deposited on a side close to the diffusion layer to form the catalyst layer, a part of the polymer electrolyte floats up, and grows a thinner polymer electrolyte layer structure while drying, so as to meet the requirement of preventing transmission of electrons while allowing the protons to pass through.

Optionally, the polymer electrolyte resin includes at least one of a perfluorosulfonic acid resin, a perfluorocarboxylic acid resin, a sulfonated polyether ether ketone resin, and a sulfonated polysulfone resin.

Optionally, the mass concentration of the polymer electrolyte resin in the catalyst slurry is 2%-20%, the mass concentration of the catalyst active material in the catalyst slurry is 5%-45%, and the mass ratio of the catalyst active material to the polymer electrolyte resin is 1: (0.2-0.5).

In a possible embodiment, the catalyst slurry further includes a high boiling point solvent, and a boiling point of the high boiling point solvent is greater than a boiling point of the catalyst solvent. It can avoid the rapid volatilization of the solvent, and can make the polymer electrolyte and the catalyst have enough time to be physically separated, so that the catalyst can be deposited, and the polymer electrolyte can float up to form the polymer electrolyte layer.

Optionally, the catalyst solvent includes at least one of isopropyl alcohol, ethanol, methanol, and propanol, and the high boiling point solvent includes ethylene glycol or glycerol.

Optionally, the catalyst slurry further includes a pore forming agent, so as to adjust the porosity of the catalyst layer.

Optionally, the pore forming agent is at least one of ammonium acetate, ammonium sulfate, and ammonium bicarbonate. Optionally, the mass ratio of the catalyst active material to the high boiling point solvent and the pore forming agent is 1: (0.1-3): (0.1-0.33).

In a possible embodiment, a porous polymer layer is formed while forming the positive pole catalyst layer on the positive pole diffusion layer to obtain the positive electrode; or/and a porous polymer layer is formed while forming the negative pole catalyst layer on the negative pole diffusion layer to obtain the negative electrode; the porous polymer layer is soaked in an acid liquid or an alkali liquid, and then dried to form the polymer electrolyte layer; the positive electrode and the negative electrode are compounded so that the polymer electrolyte layer is located between the positive pole catalyst layer and the negative pole catalyst layer.

The porous polymer layer is prepared while preparing the catalyst layer, then the porous polymer layer is soaked in an acid liquid or an alkali liquid to form the polymer electrolyte layer having the proton exchange function, without a separate conventional proton exchange membrane for preparing the electrode assembly, then the preparation is relatively convenient, and the use of the conventional proton exchange membrane is omitted.

Optionally, the acid liquid is a phosphoric acid solution, a sulfuric acid solution, a hydrochloric acid solution, or a nitric acid solution. Optionally, the mass concentration of the acid liquid is 5%-15%.

Optionally, the alkali liquid is a sodium hydroxide solution or/and a potassium hydroxide solution; and optionally, the mass concentration of the alkali liquid is 5%-15%. In a possible embodiment, the preparation method of the positive electrode or/and the negative electrode includes: mixing a catalyst active material, a catalyst solvent, and a porous polymer to obtain a catalyst slurry; coating the catalyst slurry on a surface of the diffusion layer, and drying the catalyst slurry to form on the diffusion layer the catalyst layer close to the diffusion layer and the porous polymer layer away from the diffusion layer.

When curing the catalyst slurry layer, the catalyst and a part of the porous polymer layer may be deposited on a side close to the diffusion layer to form the catalyst layer, a part of the porous polymer layer floats up, and grows a thinner porous polymer layer structure while drying, so as to facilitate the subsequent preparation of the electrode assembly.

Optionally, the material of the polymer electrolyte includes polybenzimidazole. Optionally, the mass concentration of the porous polymer in the catalyst slurry is 2%-20%, the mass concentration of the catalyst active material in the catalyst slurry is 5%-45%, and the mass ratio of the catalyst active material to the porous polymer is 1: (0.2-0.5).

Optionally, the catalyst slurry further includes a high boiling point solvent, and a boiling point of the high boiling point solvent is greater than a boiling point of the catalyst solvent.

Optionally, the catalyst solvent includes at least one of isopropyl alcohol, ethanol, methanol, and propanol. The high boiling point solvent includes ethylene glycol or glycerol.

Optionally, the catalyst slurry further includes a pore forming agent; and optionally, the pore forming agent includes at least one of ammonium acetate, ammonium sulfate, and ammonium bicarbonate.

Optionally, a mass ratio of the catalyst active material to the high boiling point solvent and the pore forming agent is 1: (0.1-3): (0.1-0.33).

In a possible embodiment, the positive pole catalyst layer is formed on the positive pole diffusion layer to obtain the positive electrode, and the negative pole catalyst layer is formed on the negative pole diffusion layer to obtain the negative electrode; the catalyst layer of the positive electrode or/and the negative electrode is soaked in a polymer electrolyte resin solution, and dried to form a polymer electrolyte resin layer on the catalyst layer; the positive electrode and the negative electrode are compounded so that the polymer electrolyte resin layer is located between the positive pole catalyst layer and the negative pole catalyst layer.

A separate polymer electrolyte resin layer is formed by soaking, so as to serve a proton exchange function, without a separate proton exchange membrane for preparing the electrode assembly, then the preparation is relatively convenient, and the use of the conventional proton exchange membrane is omitted.

Optionally, the mass concentration of the polymer electrolyte resin solution is 3%-10%; and optionally, the polymer electrolyte resin includes at least one of a perfluorosulfonic acid resin, a perfluorocarboxylic acid resin, a sulfonated polyether ether ketone resin, and a sulfonated polysulfone resin. In a possible embodiment, the positive pole catalyst layer is formed on the positive pole diffusion layer to obtain the positive electrode, and the negative pole catalyst layer is formed on the negative pole diffusion layer to obtain the negative electrode; the catalyst layer of the positive electrode or/and the negative electrode is soaked in a porous polymer solution, and dried to form a porous polymer layer on the catalyst layer; the porous polymer layer is soaked in an acid liquid or an alkali liquid, and dried to form a polymer electrolyte layer; the positive electrode and the negative electrode are compounded so that the polymer electrolyte layer is located between the positive pole catalyst layer and the negative pole catalyst layer.

A separate porous polymer layer is first formed by soaking, then the porous polymer layer is soaked in an acid liquid or an alkali liquid, to form the polymer electrolyte layer having the proton exchange function, without a separate conventional proton exchange membrane for preparing the electrode assembly, then the preparation is relatively convenient, and the use of the conventional proton exchange membrane is omitted.

Optionally, the mass concentration of the porous polymer resin solution is 3%-10%; and optionally, the porous polymer resin is polybenzimidazole.

Optionally, the acid liquid is a phosphoric acid solution, a sulfuric acid solution, a hydrochloric acid solution, or a nitric acid solution; and optionally, the mass concentration of the acid liquid is 5%-15%.

Optionally, the alkali liquid is a sodium hydroxide solution or/and a potassium hydroxide solution; and optionally, the mass concentration of the alkali liquid is 5%-15%.

In a possible embodiment, the preparation method of the positive electrode or/and the negative electrode includes: mixing a catalyst active material, a catalyst solvent, and a hydrophobic polymer to obtain a catalyst slurry; coating the catalyst slurry on a surface of the diffusion layer, and drying the catalyst slurry to form the catalyst layer on the diffusion layer.

The catalyst layer is formed first, and the catalyst layer includes the hydrophobic polymer and catalyst particles. On the one hand, the emulsion is in a form of particles, and the particles are bonded to each other to prevent the emulsion from covering the catalyst, which can make the catalyst and the fuel gas have a sufficient contact area and increase the reaction rate; on the other hand, it can make the catalyst layer have better hydrophobicity, and the water produced by the surface reaction will affect the subsequent catalytic reaction.

Optionally, the hydrophobic polymer is PTFE emulsion or dimethyl silicone oil. Optionally, the mass concentration of the hydrophobic polymer in the catalyst slurry is 2%-20%, the mass concentration of the catalyst active material in the catalyst slurry is 5%-45%, and the mass ratio of the catalyst active material to the hydrophobic polymer is 1: (0.2-0.5).

In a possible embodiment, the catalyst slurry further includes a pore forming agent, so as to adjust the porosity of the catalyst layer. Optionally, the pore forming agent includes at least one of ammonium acetate, ammonium sulfate, and ammonium bicarbonate. Optionally, the mass ratio of the catalyst active material to the pore forming agent is 1: (0.1-0.33).

### Brief Description of Drawings

In order to more clearly illustrate technical solutions of embodiments of the present disclosure, accompanying drawings which need to be used in the embodiments will be introduced briefly below, and it should be understood that the accompanying drawings below merely show some embodiments of the present disclosure, therefore, they should not be considered as limitation on the scope, and those ordinarily skilled in the art still could obtain other relevant accompanying drawings according to these accompanying drawings, without using any creative effort, which also fall within the scope of protection of the present disclosure.
FIG. 1 is a first structural schematic view of an electrode assembly provided in an embodiment of the present disclosure;
FIG. 2 is a second structural schematic view of the electrode assembly provided in an embodiment of the present disclosure;
FIG. 3 is a first scanning electron micrograph of a positive pole of a cell provided in Embodiment 1 of the present disclosure;
FIG. 4 is a second scanning electron micrograph of the positive pole of the cell provided in Embodiment 1 of the present disclosure; and
FIG. 5 is a third scanning electron micrograph of the positive pole of the cell provided in Embodiment 1 of the present disclosure.

Reference signs: 110-positive pole diffusion layer; 120-positive pole catalyst layer; 130-negative pole diffusion layer; 140-negative pole catalyst layer; 150-polymer electrolyte layer.

### Detailed Description of Embodiments

The inventors have found through research that proton exchange membranes currently used are typically Nafion series membranes, for example, perfluorosulfonic acid proton exchange membrane, which is obtained by heating perfluorosulfonic acid resin to a molten state (generally, the temperature is controlled at 160-230°C) and then extruding the perfluorosulfonic acid resin into a membrane, and then heating the membrane to a softened state for compounding and reinforcement. The perfluorosulfonic acid proton exchange membrane is used for preparing an MEA membrane electrode, which is then used for preparing the fuel cell. When the fuel cell works under a condition of over 60 °C, the power generation capacity will be greatly reduced; when the fuel cell works under a condition of over 80 °C, the proton exchange membrane will change, which seriously affects the safety of the fuel cell. The reason for the above problems is mainly that the proton exchange membrane will swell under high temperature conditions.

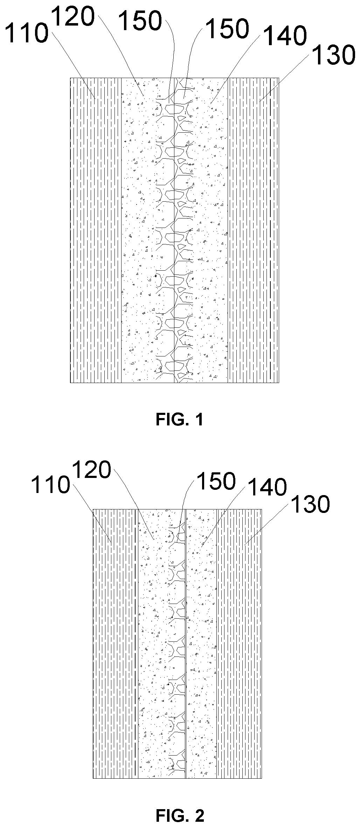

FIG. 1 is a first structural schematic view of an electrode assembly provided in an embodiment of the present disclosure; and FIG. 2 is a second structural schematic view of the electrode assembly provided in an embodiment of the present disclosure. Referring to FIG. 1 and FIG. 2, the electrode assembly of the present disclosure does not need to use a proton exchange membrane, which solves from the source the problem of swelling of the proton exchange membrane under high temperature conditions, and reduces the production cost.

A preparation method of the electrode assembly provided by the present disclosure includes: forming a positive pole catalyst layer 120 on a positive pole diffusion layer 110 to obtain a positive electrode; forming a negative pole catalyst layer 140 on a negative pole diffusion layer 130 to obtain a negative electrode; and growing a polymer electrolyte layer 150 on the positive pole catalyst layer 120 or/and the negative pole catalyst layer 140; and compounding the positive electrode and the negative electrode so that the polymer electrolyte layer 150 is located between the positive pole catalyst layer 120 and the negative pole catalyst layer 140.

Referring to FIG. 1, the polymer electrolyte layer 150 is grown on both the positive pole catalyst layer 120 and the negative pole catalyst layer 140 to form the electrode assembly as shown in FIG. 1. Referring to FIG. 2, the polymer electrolyte layer 150 is grown on the positive pole catalyst layer 120 to form the electrode assembly as shown in FIG. 2. Certainly, in other embodiments, it is also feasible that the polymer electrolyte layer 150 is grown only on the negative pole catalyst layer 140, which is not limited in the present disclosure.

In the present disclosure, the material of the polymer electrolyte layer 150, only containing a polymer electrolyte, can meet the requirement of preventing transmission of electrons while allowing the protons to pass through. Different from the proton exchange membranes in the prior art, it is directly grown on the catalyst layer, without the need of preparing a membrane structure, and the polymer electrolyte layer 150 is relatively thin and uniform in thickness, which can reduce the internal resistance of the electrode assembly, and improve the energy density of the electrode assembly.

Further, the electrode assembly provided in the present disclosure can be prepared in a plurality of manners, and three preparation methods thereof are described one by one below.

### First method:

### S110, preparing a catalyst slurry

A catalyst active material, a catalyst solvent, and a polymer electrolyte resin are mixed to obtain a catalyst slurry.

The polymer electrolyte resin above includes at least one of a perfluorosulfonic acid resin, a perfluorocarboxylic acid resin, a sulfonated polyether ether ketone resin, and a sulfonated polysulfone resin. For example, the polymer electrolyte solution is at least one of a perfluorosulfonic acid resin solution, a perfluorocarboxylic acid resin solution, a sulfonated polyether ether ketone resin solution, and a sulfonated polysulfone resin solution.

Optionally, the mass concentration of the polymer electrolyte resin in the catalyst slurry is 2%-20%. Exemplarily, the mass concentration of the polymer electrolyte resin in the catalyst slurry is 2%, 5%, 10%, 15% or 20%.

The catalyst active material above includes a noble metal catalyst or/and a metal oxide catalyst. For example, the catalyst active material is a metal catalyst, or the catalyst active material is a metal oxide catalyst, or the catalyst active material is a mixture of a metal catalyst and a metal oxide catalyst.

Optionally, the noble metal catalyst includes at least one of a Pt catalyst, a Pt-based composite catalyst, and a Pt/C catalyst; and the metal oxide catalyst includes at least one of an iridium oxide, a rubidium oxide, and a ruthenium oxide.

Optionally, the mass concentration of the catalyst active material in the catalyst slurry is 5%-45%. Exemplarily, the mass concentration of the catalyst active material in the catalyst slurry is 5%, 15%, 25%, 35%, or 45%.

Optionally, the mass ratio of the catalyst active material to the polymer electrolyte resin is 1: (0.2-0.5). Exemplarily, the mass ratio of the catalyst active material to the polymer electrolyte resin is 1:0.2, 1:0.3, 1:0.4, or 1:0.5.

Further, a particle size range of the catalyst active material is 0.1-1 nm, and a particle size range of the polymer electrolyte resin material is 0.2-5 µm. Exemplarily, the particle size range of the catalyst active material is 0.1-0.5 nm or 0.5-1 nm, and the particle size range of the polymer electrolyte material is 0.2-1 µm, 1-3 µm, or 3-5 µm.

The catalyst solvent above may be water, an organic solvent, or the like. For example, the organic solvent may be at least one of isopropyl alcohol, ethanol, methanol, and propanol.

In the embodiments of the present disclosure, in order to improve the performance of the catalyst slurry, a high boiling point solvent (the boiling point of the high boiling point solvent is greater than the boiling point of the catalyst solvent) and a pore forming agent may also be added to the catalyst slurry. Optionally, the high boiling point solvent is ethylene glycol or glycerol; and the pore forming agent includes at least one of ammonium acetate, ammonium sulfate, and ammonium bicarbonate.

Optionally, the mass ratio of the catalyst active material to the high boiling point solvent and the pore forming agent is 1: (0.1-3): (0.1-0.33). Exemplarily, the mass ratio of the catalyst active material to the high boiling point solvent and the pore forming agent is 1:0.1:0.1, 1:3:0.33, 1:1:0.2, or 1:2:0.3.

### S120, preparing a positive electrode and a negative electrode

The catalyst slurry is coated on the surface of the diffusion layer and cured, so that a catalyst layer close to the diffusion layer and a polymer electrolyte resin layer away from the diffusion layer are formed on the diffusion layer.

Optionally, when the diffusion layer is heated to 40-120 °C, the catalyst slurry is sprayed onto the surface of the diffusion layer, and then cured. Optionally, the curing is performed at 80-150 °C.

The diffusion layer above is one selected from the group consisting of carbon fiber paper, carbon fiber woven fabric, carbon black paper, foam metal, and nonwoven fabric. Optionally, the foam metal is one selected from the group consisting of foam nickel, foam copper, foam aluminum, foam zinc, and foam titanium. Further, the negative pole diffusion layer 130 and the positive pole diffusion layer 110 are both carbon fiber paper.

For the positive electrode, the positive pole diffusion layer 110 is first heated to 40-120 °C, and then the formulated positive pole catalyst slurry is uniformly sprayed on a surface of the positive pole diffusion layer 110. After the spraying, curing is performed at 80-150 °C for 1-6 h, so that a positive pole catalyst layer 120 close to the positive pole diffusion layer 110 and a polymer electrolyte layer away from the positive pole diffusion layer 110 are formed on the positive pole diffusion layer 110, to be used as a positive electrode.

For the negative electrode, the negative pole diffusion layer 130 is first heated to 40-120 °C, and then the formulated negative pole catalyst slurry is uniformly sprayed on a surface of the negative pole diffusion layer 130. After the spraying, curing is performed at 80-150 °C for 1-6 h, so that a negative pole catalyst layer 140 close to the negative pole diffusion layer 130 and a polymer electrolyte layer away from the negative pole diffusion layer 130 are formed on the negative pole diffusion layer 130, to be used as a negative electrode.

It should be noted that, when preparing the positive electrode and the negative electrode, it is not the fact that the catalyst slurries of the positive electrode and the negative electrode both need to be the catalyst slurry prepared in step S110, and it is feasible that the catalyst slurry prepared in step S110 is used for the preparation of the positive electrode or/and the negative electrode.

### S130, preparing an electrode assembly

The positive electrode and the negative electrode prepared in S120 are compounded so that the polymer electrolyte layer 150 is located between the positive pole catalyst layer 120 and the negative pole catalyst layer 140.

Optionally, the positive electrode and the negative electrode prepared in S120 are bonded together, wherein the polymer electrolyte layer 150 is located between the positive pole catalyst layer 120 and the negative pole catalyst layer 140, and then hot pressed for 120-300 s under a condition that a hot pressing temperature is 100-150 °C and pressure is 0.1-0.4 MPa.

If the polymer electrolyte layer 150 is formed on a side of the positive pole catalyst layer 120 of the positive electrode away from the positive pole diffusion layer 110, the negative electrode is prepared by using a common catalyst slurry, and the polymer electrolyte layer 150 is not formed on the negative pole catalyst layer 140, one polymer electrolyte layer 150 is provided between the negative pole catalyst layer 140 and the positive pole catalyst layer 120 of the prepared electrode assembly (as shown in FIG. 2).

If the polymer electrolyte layer 150 is formed on a side of the negative pole catalyst layer 140 of the negative electrode away from the negative pole diffusion layer 130, the positive electrode is prepared by using a common catalyst slurry, and the polymer electrolyte layer 150 is not formed on the positive pole catalyst layer 120, one polymer electrolyte layer 150 is provided between the negative pole catalyst layer 140 and the positive pole catalyst layer 120 of the prepared electrode assembly.

If the polymer electrolyte layer 150 is formed on a side of the positive pole catalyst layer 120 of the positive electrode away from the positive pole diffusion layer 110, and the polymer electrolyte layer 150 is formed on a side of the negative pole catalyst layer 140 of the negative electrode away from the negative pole diffusion layer 130, two polymer electrolyte layers 150 are provided between the negative pole catalyst layer 140 and the positive pole catalyst layer 120 of the prepared electrode assembly (as shown in FIG. 1).

### Second method:

### S210, preparing a catalyst slurry

A catalyst active material, a catalyst solvent, and a porous polymer are mixed to obtain a catalyst slurry.

The catalyst active material above is consistent with the catalyst active material in the first method, and is not described herein again. The solvent above is consistent with the solvent in the first method, and is not described herein again. In the present embodiment, the catalyst slurry further may include a high boiling point solvent and/or a pore forming agent, and the high boiling point solvent and the pore forming agent are consistent with those in the first method, and are not described herein again.

The porous polymer above is polybenzimidazole. Optionally, the mass concentration of the porous polymer in the catalyst slurry is 2%-20%. Exemplarily, the mass concentration of the porous polymer in the catalyst slurry is 2%, 5%, 10%, 15%, or 20%.

Optionally, the mass concentration of the catalyst active material in the catalyst slurry is 5%-45%, and exemplarily, the mass concentration of the catalyst active material in the catalyst slurry is 5%, 10%, 15%, 20%, 25%, 30%, 35%, 40%, or 45%.

The mass ratio of the catalyst active material to the porous polymer is 1: (0.2-0.5). Exemplarily, the mass ratio of the catalyst active material to the porous polymer is 1:0.2, 1:0.3, 1:0.4, or 1:0.5. In the embodiments of the present disclosure, in order to improve the performance of the catalyst slurry, a high boiling point solvent (the boiling point of the high boiling point solvent is greater than the boiling point of the catalyst solvent), a pore forming agent and so on may also be added to the catalyst slurry. Optionally, the high boiling point solvent is ethylene glycol or glycerol; and the pore forming agent includes at least one of ammonium acetate, ammonium sulfate, and ammonium bicarbonate.

Optionally, the mass ratio of the catalyst active material to the high boiling point solvent and the pore forming agent is 1: (0.1-3): (0.1-0.33). Exemplarily, the mass ratio of the catalyst active material to the high boiling point solvent and the pore forming agent is 1:0.1:0.1, 1:3:0.33, 1:1:0.2, or 1:2:0.3.

### S220, preparing a positive electrode and a negative electrode

The catalyst slurry is coated on the surface of the diffusion layer, and dried to form on the diffusion layer a catalyst layer close to the diffusion layer and a porous polymer layer away from the diffusion layer, and the porous polymer layer is soaked in an acid liquid or an alkali liquid, and then is dried to form a polymer electrolyte layer.

Optionally, when the diffusion layer is heated to 60-180 °C, the catalyst slurry is sprayed onto the surface of the diffusion layer, and then cured. Optionally, the curing is performed at 80-160 °C.

The diffusion layer above is consistent with the diffusion layer in the first method, and is not described herein again.

For the positive electrode, the positive pole diffusion layer 110 is first heated to 60-180 °C, and then the formulated positive pole catalyst slurry is uniformly sprayed on a surface of the positive pole diffusion layer 110. After the spraying, curing is performed at 80-160 °C for 1-5 h, so that a positive pole catalyst layer 120 close to the positive pole diffusion layer 110 and a porous polymer layer away from the positive pole diffusion layer 110 are formed on the positive pole diffusion layer 110. At this time, the porous polymer layer still cannot meet the requirement of allowing the protons to pass through and preventing transmission of electrons, then the porous polymer layer is soaked in the acid liquid or the alkali liquid for 5-4 h and then dried under a condition of 80-200 °C to serve as a positive electrode, then the polymer electrolyte layer 150 capable of meeting the requirement of allowing the protons to pass through and preventing transmission of electrons can be obtained.

For the negative electrode, the negative pole diffusion layer 130 is first heated to 60-180 °C, and then the formulated negative pole catalyst slurry is uniformly sprayed on a surface of the negative pole diffusion layer 130. After the spraying, curing is performed at 80-160 °C for 1-5 h, so that a negative pole catalyst layer 140 close to the negative pole diffusion layer 130 and a porous polymer layer away from the negative pole diffusion layer 130 are formed on the negative pole diffusion layer 130. At this time, the porous polymer layer still cannot meet the requirement of allowing the protons to pass through and preventing transmission of electrons, then the porous polymer layer is soaked in the acid liquid or the alkali liquid for 5-4 h and then dried under a condition of 80-200 °C to serve as a negative electrode, then the polymer electrolyte layer 150 capable of meeting the requirement of allowing the protons to pass through and preventing transmission of electrons can be obtained.

It should be noted that, when preparing the positive electrode and the negative electrode, it is not the fact that the catalyst slurries of the positive electrode and the negative electrode both need to be the catalyst slurry prepared in step S210, and it is feasible that the catalyst slurry prepared in step S210 is used for the preparation of the positive electrode or/and the negative electrode.

In the embodiments of the present disclosure, the acid liquid is a phosphoric acid solution, a sulfuric acid solution, a hydrochloric acid solution, or a nitric acid solution. Optionally, the mass concentration of the acid liquid is 5%-15%; and exemplarily, the mass concentration of the acid liquid is 5%, 8%, 12%, or 15%.

In the embodiments of the present disclosure, the alkali liquid is a sodium hydroxide solution or/and a potassium hydroxide solution; optionally, the mass concentration of the alkali liquid is 5%-15%; and exemplarily, the mass concentration of the alkali liquid is 5%, 8%, 12%, or 15%.

### S230, preparing an electrode assembly

The positive electrode and the negative electrode prepared in step S220 are compounded so that the polymer electrolyte layer 150 is located between the positive pole catalyst layer 120 and the negative pole catalyst layer 140.

Optionally, the positive electrode and the negative electrode prepared in S220 are bonded together, wherein the polymer electrolyte layer 150 is located between the positive pole catalyst layer 120 and the negative pole catalyst layer 140, and then hot pressed for 120-300 s under a condition that a hot pressing temperature is 100-150 °C and pressure is 0.1-0.4 MPa.

In the second method, it is also feasible that, as in the first method, an electrode assembly (as in FIG. 1 and FIG. 2) having one polymer electrolyte layer 150 or two polymer electrolyte layers 150 may be formed, which will not be described herein again.

### Third method:

### S310, preparing a catalyst slurry

A catalyst active material, a catalyst solvent, and a hydrophobic polymer are mixed to obtain a catalyst slurry.

The catalyst active material above is consistent with the catalyst active material in the first method, and is not described herein again. The solvent above is consistent with the solvent in the first method, and is not described herein again. In the present embodiment, the catalyst slurry further may include a high boiling point solvent and/or a pore forming agent, and the high boiling point solvent and the pore forming agent are consistent with those in the first method, and are not described herein again.

The hydrophobic polymer above is PTFE emulsion or dimethyl silicone oil. Optionally, the mass concentration of the hydrophobic polymer in the catalyst slurry is 2%-20%, and exemplarily, the mass concentration of the hydrophobic polymer in the catalyst slurry is 2%, 5%, 10%, 15%, or 20%.

Optionally, the mass concentration of the catalyst active material in the catalyst slurry is 5%-45%, and exemplarily, the mass concentration of the catalyst active material in the catalyst slurry is 5%, 10%, 15%, 20%, 25%, 30%, 35%, or 45%.

Optionally, the mass ratio of the catalyst active material to the hydrophobic polymer is 1: (0.2-0.5). Exemplarily, the mass ratio of the catalyst active material to the hydrophobic polymer is 1:0.2, 1:0.3, 1:0.4, or 1:0.5.

In the embodiments of the present disclosure, in order to improve the performance of the catalyst slurry, a pore forming agent may also be added to the catalyst slurry. The pore forming agent includes at least one of ammonium acetate, ammonium sulfate, and ammonium bicarbonate.

Optionally, the mass ratio of the catalyst active material to the pore forming agent is 1: (0.1-0.33). Exemplarily, the mass ratio of the catalyst active material to the pore forming agent is 1:0.1, 1:0.33, 1:0.2, or 1:0.3.

### S320, preparing a positive electrode and a negative electrode

The catalyst slurry is coated on the surface of the diffusion layer, and dried to form a catalyst layer on the diffusion layer, and then the resultant is soaked in the polymer electrolyte solution, and dried to grow a polymer electrolyte layer 150 on a surface of the catalyst layer to form an electrode, wherein the mass concentration of the polymer electrolyte solution is 3%-8%.

The material of the above polymer electrolyte includes at least one of a perfluorosulfonic acid resin, a perfluorocarboxylic acid resin, a sulfonated polyether ether ketone resin, a sulfonated polysulfone resin, and a polybenzimidazole soaked in an acid liquid or an alkali liquid. Optionally, the mass concentration of the polymer electrolyte solution is 3%, 5%, 7%, or 8%.

If the polymer electrolyte solution includes at least one of a perfluorosulfonic acid resin solution, a perfluorocarboxylic acid resin solution, a sulfonated polyether ether ketone resin solution, and a sulfonated polysulfone resin solution, the preparation method of the electrode is as follows: when the diffusion layer is heated to 60-110 °C, spraying the catalyst slurry of step S310 onto the surface of the diffusion layer, and then drying the catalyst slurry at 100-180 °C for 30-120 min, so that a catalyst layer is formed on the surface of the diffusion layer. The diffusion layer having the catalyst layer is soaked in a polymer electrolyte solution (solvent is isopropyl alcohol) for 12-24 h, and taken out and then dried at 80-190 °C, so that a structure of the polymer electrolyte layer 150 is formed on the surface of the catalyst layer.

If the polymer electrolyte solution is a polybenzimidazole solution, the preparation method of the electrode is as follows: when the diffusion layer is heated to 60-110 °C, spraying the catalyst slurry of step S310 onto the surface of the diffusion layer, and then drying the catalyst slurry at 100-180 °C for 30-120 min, so that a catalyst layer is formed on the surface of the diffusion layer. The diffusion layer having the catalyst layer is soaked in a polymer electrolyte solution (the solvent is isopropyl alcohol) for 12-24 h, and then taken out and dried at 80-190 °C, then soaked in an acid liquid or an alkali liquid (the acid liquid is a phosphoric acid solution, optionally, the alkali liquid is a sodium hydroxide solution or/and a potassium hydroxide solution) for 12-24 h, and the diffusion layer is taken out and dried to form a structure of the polymer electrolyte layer 150 on the surface of the catalyst layer.

It should be noted that, when preparing the positive electrode and the negative electrode, it is not the fact that the catalyst slurries of the positive electrode and the negative electrode both need to be soaked in the polymer electrolyte solution to form the polymer electrolyte layer 150, and it is sufficient that the positive electrode or/and the negative electrode are soaked in the polymer electrolyte solution to form the polymer electrolyte layer 150.

### S330, preparing an electrode assembly

The positive electrode and the negative electrode prepared in step S320 are compounded so that the polymer electrolyte layer 150 is located between the positive pole catalyst layer 120 and the negative pole catalyst layer 140.

Optionally, the positive electrode and the negative electrode prepared in S320 are bonded together, wherein the polymer electrolyte layer 150 is located between the positive pole catalyst layer 120 and the negative pole catalyst layer 140, and then hot pressed for 120-300 s under a condition that a hot pressing temperature is 100-150 °C and pressure is 0.1-0.4 MPa.

In the third method, it is also feasible that an electrode assembly (as in FIG. 1 and FIG. 2) having one polymer electrolyte layer 150 or two polymer electrolyte layers 150 may be formed, which will not be described herein again.

The three preparation methods above can all form an electrode assembly without a proton exchange membrane. The electrode assembly includes a polymer electrolyte layer 150; a negative pole catalyst layer 140 and a positive pole catalyst layer 120 located on two surfaces of the polymer electrolyte layer 150; a negative pole diffusion layer 130 located on the negative pole catalyst layer 140 away from the polymer electrolyte layer 150, and a positive pole diffusion layer 110 located on the positive pole catalyst layer 120 away from the polymer electrolyte layer 150, wherein the polymer electrolyte layer 150 is grown on the negative pole catalyst layer 140 or/and the positive pole catalyst layer 120.

Optionally, the polymer electrolyte includes at least one of a perfluorosulfonic acid resin, a perfluorocarboxylic acid resin, a sulfonated polyether ether ketone resin, a sulfonated polysulfone resin, and polybenzimidazole soaked in an acid liquid or an alkali liquid.

In an embodiment of the present disclosure, the thickness of the polymer electrolyte layer 150 is 1-10 µm; and the thickness of the electrode assembly for a fuel cell is less than 200 µm. The porosity of the polymer electrolyte layer 150 is 10%-90%. For example, the thickness of the polymer electrolyte layer 150 is 1-3 µm; and the thickness of the electrode assembly for a fuel cell is 100-120 µm. The porosity of the polymer electrolyte layer 150 is 10%-30%. The thickness of the polymer electrolyte layer 150 is 3-6 µm; the thickness of the electrode assembly for a fuel cell is 120-150 µm. The porosity of the polymer electrolyte layer 150 is 30%-60%. The thickness of the polymer electrolyte layer 150 is 6-10 µm; the thickness of the electrode assembly for a fuel cell is 150-190 µm. The porosity of the polymer electrolyte layer 150 is 60%-90%.

The present disclosure further provides a fuel cell, including a negative pole gas guide groove, a positive pole gas guide groove, and the above electrode assembly for a fuel cell provided between the negative pole gas guide groove and the positive pole gas guide groove.

In order to make the objectives, technical solutions, and advantages of the embodiments of the present disclosure clearer, the technical solutions in the embodiments of the present disclosure will be described below clearly and completely. If no specific conditions are specified in the embodiments, they are carried out under normal conditions or conditions recommended by manufacturers. If manufacturers of reagents or apparatuses used are not specified, they are conventional products commercially available.

### Embodiment 1

### Preparation of positive pole:

0.02 g of 60 wt% platinum-carbon catalyst was weighed into a beaker, then 2 g of ultrapure water was added, and the resultant was stirred by a magnetic stirrer at a rotational speed of 1200 rpm for 8 min to obtain a slurry.

To the above slurry, 0.5 g of perfluorosulfonic acid resin solution with mass concentration of 5% was added, and then the above slurry was placed in a homogenizer and stirred at a stirring rotational speed of 1800 rpm for 15 min.

After the second time of stirring was completed, 4 g of isopropyl alcohol was added to the slurry, then 1 g of ethylene glycol was added to the slurry, and after 5 min of ultrasonic treatment, an ammonium acetate solution (ammonium acetate solution formed by dissolving 0.1 g of ammonium acetate in 0.5 g of ultrapure water) was added, and then the ultrasonic treatment was continued for 30 min to obtain a catalyst slurry.

Carbon fiber paper was used as a positive pole diffusion layer. First, the carbon fiber paper was cut into a rectangular shape of 5 cm x 6 cm, and placed on a heating platform for heating at a heating temperature of 100 °C. Then, the formulated catalyst slurry was uniformly sprayed onto carbon fiber paper, and cured at a temperature of 120 °C for 4 h after the spraying was completed. The cured electrode was used as the positive pole of the fuel cell.

### Preparation of negative pole:

0.01 g of 33 wt% platinum-carbon catalyst was weighed into a beaker, then 2 g of ultrapure water was added, and the water and the catalyst were placed in a homogenizer and stirred at a rotational speed of 1200 rpm for 8 min to obtain a slurry.

To the above slurry, 0.1 g of perfluorosulfonic acid resin solution with mass concentration of 5% was added, and then the above slurry was placed in the homogenizer and stirred at a stirring rotational speed of 1800 rpm for 15 min.

After the second time of stirring was completed, 2 g of isopropyl alcohol was added to the slurry, then 0.5 g of ethylene glycol was added to the slurry, and after 5 min of ultrasonic treatment, an ammonium acetate solution (ammonium acetate solution formed by dissolving 0.08 g of ammonium acetate in 0.25 g of ultrapure water) was added, and then the ultrasonic treatment was continued for 30 min to obtain a catalyst slurry.

Carbon fiber paper was used as a negative pole diffusion layer. First, the carbon fiber paper was cut into a rectangular shape of 5 cm x 6 cm, and placed on a heating platform for heating at a heating temperature of 100 °C. Then, the formulated catalyst slurry was uniformly sprayed onto carbon fiber paper, and cured at a temperature of 120 °C for 4 h after the spraying was completed. The cured electrode was used as the negative pole of the fuel cell.

### Preparation of electrode assembly:

The cured electrode was cut into a rectangular shape of 2.5 cm x 5 cm, and then the positive and negative pole plates were bonded together and hot pressed, wherein a hot pressing temperature was 120 °C, hot pressing period was 200 s, and pressure was 2 MPa.

### Discharging performance test:

The pressed positive and negative poles were stuck to the gas guide groove with silica gel, and hydrogen was introduced into the negative pole, wherein the hydrogen pressure was 0.3 MPa; the positive pole was supplied with oxygen by air. The cell was activated first, then the activated cell was subjected to a discharging test, and when the temperature of the cell was 60 °C, and the voltage was 0.61 V, the current density was 880 mAh/cm².

### Embodiment 2

The method provided by the present embodiment is consistent with the method of Embodiment 1, except that ethylene glycol was not added to the slurry.

### Embodiment 3

The method provided by the present embodiment is consistent with the method of Embodiment 1, except that ammonium acetate solution was not added to the slurry.

### Embodiment 4

The method provided by the present embodiment is consistent with the method of Embodiment 1, except that the mass concentration of the perfluorosulfonic acid resin solution was 10%.

### Embodiment 5

The method provided in the present embodiment is consistent with the method of Embodiment 1, except that the method for preparing the negative pole catalyst slurry was that: 0.01 g of 33 wt% platinum-carbon catalyst was weighed into a beaker, then 2 g of ultrapure water was added, and the water and the catalyst were placed in a homogenizer and stirred at a rotational speed of 1200 rpm for 8 min to obtain a slurry. To the above slurry, 2 g of isopropyl alcohol was added, and then 0.5 g of ethylene glycol was added to the slurry, and after 5 min of ultrasonic treatment, an ammonium acetate solution (ammonium acetate solution formed by dissolving 0.08 g of ammonium acetate in 0.25 g of ultrapure water) was added, and then the ultrasonic treatment was continued for 30 min to obtain a catalyst slurry.

Embodiments 1-5 are summarized as in Table 1.

**Table 1 Preparation Method and Discharging Performance of Electrode Assembly**

| | Catalyst Slurry | Discharging Performance Test |
|---|---|---|
| Embodiment 1 | To both positive and negative pole catalyst slurries, ethylene glycol, ammonium acetate, and perfluorosulfonic acid resin with mass concentration of 5% were added | When the temperature of the cell was 60 °C, and the voltage was 0.61 V, the current density was 880 mAh/cm². |
| Embodiment 2 | To both positive and negative pole catalyst slurries, ammonium acetate and perfluorosulfonic acid resin with mass concentration of 5% were added | When the temperature of the cell was 60 °C, and the voltage was 0.60 V, the current density was 520 mAh/cm² |
| Embodiment 3 | To both positive and negative pole catalyst slurries, ethylene glycol and perfluorosulfonic acid resin with mass concentration of 5% were added | When the temperature of the cell was 60 °C, and the voltage was 0.62 V, the current density was 700 mAh/cm² |
| Embodiment 4 | To both positive and negative pole catalyst slurries, ethylene glycol, ammonium acetate, and perfluorosulfonic acid resin with mass concentration of 10% were added | When the temperature of the cell was 60 °C, and the voltage was 0.60 V, the current density was 480 mAh/cm² |
| Embodiment 5 | To the positive pole catalyst slurry, ethylene glycol, ammonium acetate, and perfluorosulfonic acid resin with mass concentration of 5% were added; to the negative pole catalyst slurry, perfluorosulfonic acid resin with mass concentration of 5% was not added | When the temperature of the cell was 60 °C, and the voltage was 0.60 V, the current density was 580 mAh/cm² |

From Table 1, it can be seen that the methods provided in Embodiments 1-5 can all obtain the electrode assemblies that do not need to use the conventional proton exchange membrane, and the electrode assemblies prepared by the methods provided in Embodiment 1 and Embodiment 3 have better discharging effect.

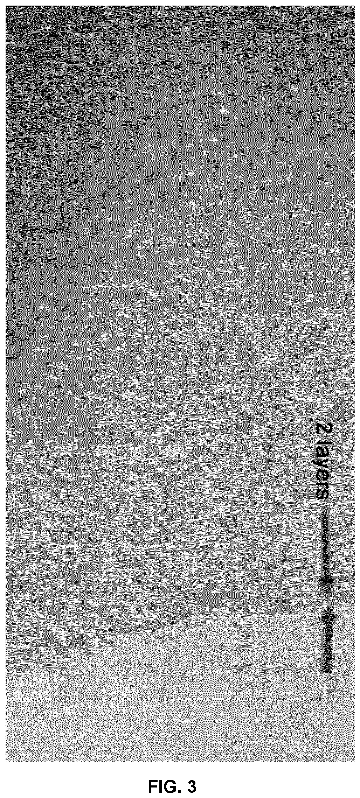

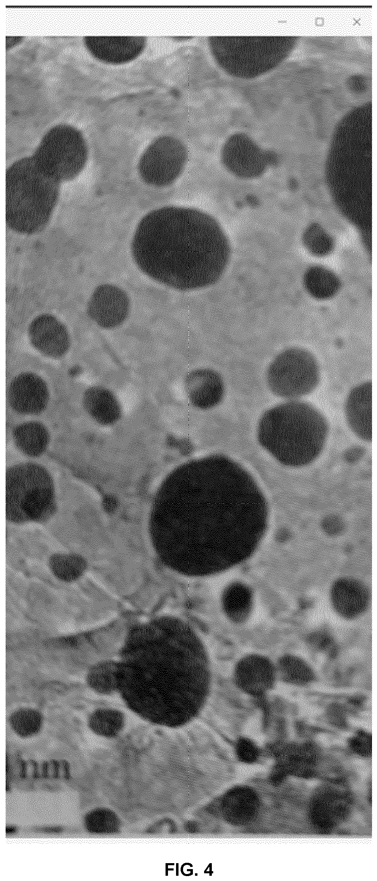

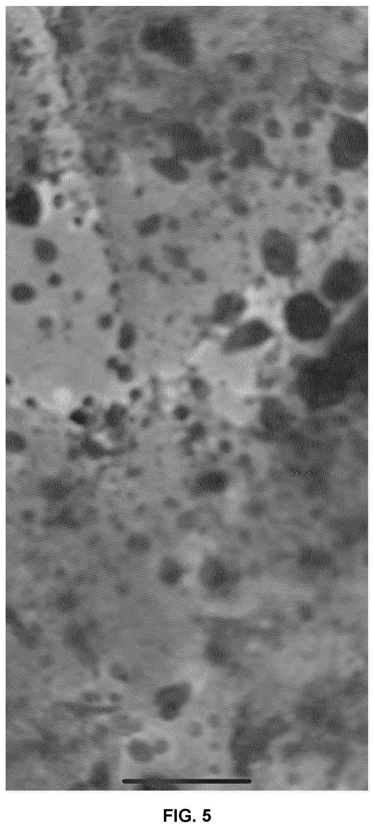

FIG. 3 is a first scanning electron micrograph of a positive pole of a cell provided in Embodiment 1 of the present disclosure; FIG. 4 is a second scanning electron micrograph of the positive pole of the cell provided in Embodiment 1 of the present disclosure; and FIG. 5 is a third scanning electron micrograph of the positive pole of a cell provided in Embodiment 1 of the present disclosure. FIG. 3 is a plan scanning electron micrograph, and it can be seen from FIG. 3 that an upper surface (a place marked by double arrows) of the positive pole of the cell has a thin layer structure, indicating that a polymer electrolyte layer structure is formed on the upper surface thereof; FIG. 4 and FIG. 5 are sectional scanning electron micrographs after the positive pole of the electrode is manually removed, and it can be seen from FIG. 4 and FIG. 5 that the electrolyte and catalyst particles form a linked structure, irregular connection and stacking are formed among tiny particles, thus forming microscopic pores, achieving the effects of gas transmission and catalytic reaction, and increasing the contact area between the fuel and the catalyst particles.

### Embodiment 6

### Preparation of positive pole:

0.02 g of 60 wt% platinum-carbon catalyst was weighed into a beaker, then 2 g of ultrapure water was added, the water and the catalyst were put in an ultrasonic apparatus to be subjected to ultrasonic oscillation for 20 min, and 1 g of ethanol was continuously added, followed by 40 min of ultrasonic oscillation to obtain a slurry.

15 g of polybenzimidazole was weighed into a beaker, 85 g of dimethylacetamide was added to the beaker, and the resultant was put in a magnetic stirrer and stirred to obtain a polybenzimidazole solution with mass concentration of 15%. 1 g of the polybenzimidazole solution was weighed into the above slurry and then was subjected to 40 min of ultrasonic oscillation to obtain a catalyst slurry.

Carbon fiber paper was used as a positive pole diffusion layer. First, the carbon fiber paper was cut into a rectangular shape of 5 cm x 6 cm, and placed on a heating platform for heating at a heating temperature of 120 °C. Then, the formulated catalyst slurry was uniformly sprayed onto carbon fiber paper, and cured at a temperature of 140 °C for 4 h after the spraying was completed. The cured electrode was used as the positive pole of the fuel cell.

Finally, the prepared electrode was soaked in a phosphoric acid solution for 20 h. After the soaking was completed, the electrode was dried at 150 °C.

### Preparation of negative pole:

0.01 g of 60 wt% platinum-carbon catalyst was weighed into a beaker, then 1 g of ultrapure water was added, and the water and the catalyst were put in an ultrasonic apparatus to be subjected to ultrasonic oscillation for 20 min, 1 g of ethanol was continuously added, followed by 40 min of ultrasonic oscillation to obtain a slurry.

15 g of polybenzimidazole was weighed into a beaker, 85 g of dimethylacetamide was added to the beaker, and the resultant was put in a magnetic stirrer and stirred to obtain a polybenzimidazole solution with mass concentration of 15%. 1.5 g of the polybenzimidazole solution was weighed into the above slurry and then was subjected to 40 min of ultrasonic oscillation to obtain a catalyst slurry.

Carbon fiber paper was used as a negative pole diffusion layer. First, the carbon fiber paper was cut into a rectangular shape of 5 cm x 6 cm, and placed on a heating platform for heating at a heating temperature of 120 °C. Then, the formulated catalyst slurry was uniformly sprayed onto carbon fiber paper, and cured at a temperature of 140 °C for 4 h after the spraying was completed. The cured electrode was used as the negative pole of the fuel cell.

Finally, the prepared electrode was soaked in a phosphoric acid solution for 20 h. After the soaking was completed, the electrode was dried at 150 °C.

### Preparation of electrode assembly:

The prepared electrode was cut into a rectangular shape of 2.5 cm x 5 cm, and then the positive and negative pole plates were bonded together and hot pressed, wherein a hot pressing temperature was 120 °C, hot pressing period was 200 s, and pressure was 2 MPa.

### Discharging performance test:

The pressed positive and negative poles were stuck to the gas guide groove with silica gel, and hydrogen was introduced into the negative pole, wherein the hydrogen pressure was 0.3 MPa; the positive pole was supplied with oxygen by air. The cell was activated first, then the activated cell was subjected to a discharging test, and when the temperature of the cell was 120 °C, and the voltage was 0.63 V, the current density was 600 mAh/cm²; when the temperature of the cell was 80 °C, and the voltage was 0.63 V, the current density was 600 mAh/cm²; when the temperature of the cell was 150 °C, and the voltage was 0.63 V, the current density was 450 mAh/cm².

From the above contents, it can be seen that the cell can operate at a high temperature, and the fuel cell operating at a high temperature avoids the catalyst poisoning phenomenon, then the fuel cell has a long service life, and the cell is stable in operation.

### Embodiment 7

The method provided by the present embodiment is consistent with the method of Embodiment 6, except that ethanol was not added to the slurry.

### Embodiment 8

The method provided by the present embodiment is consistent with the method of Embodiment 6, except that the phosphoric acid solution was replaced by a potassium hydroxide solution.

### Embodiment 9

The method provided by the present embodiment is consistent with the method of Embodiment 6, except that the mass concentration of the polybenzimidazole solution was 10%.

### Embodiment 10

The method provided by the present embodiment is consistent with the method of Embodiment 6, except that the mass concentration of the polybenzimidazole solution was 20%.

### Embodiment 11

The method provided by the present embodiment is consistent with the method of Embodiment 6, except that 0.01 g of 60 wt% platinum-carbon catalyst was weighed into a beaker, then 1 g of ultrapure water was added, the water and the catalyst were put in an ultrasonic apparatus to be subjected to ultrasonic oscillation for 20 min, 1 g of ethanol was continuously added, followed by 40 min of ultrasonic oscillation to obtain a catalyst slurry.

Embodiments 6-11 are summarized as in Table 2.

**Table 2 Preparation Method and Discharging Performance of Electrode Assembly**

| | Catalyst Slurry | Soaking Solution | Discharging Performance Test |
|---|---|---|---|
| Embodiment 6 | To both positive and negative pole catalyst slurries, ethanol and polybenzimidazole solution with mass concentration of 15% were added | Phosphoric acid solution | When the temperature of the cell was 120 °C, and the voltage was 0.63 V, the current density was 600 mAh/cm²; when the temperature of the cell was 80 °C, and the voltage was 0.63 V, the current density was 600 mAh/cm²; when the temperature of the cell was 150 °C, and the voltage was 0.63 V, the current density was 450 mAh/cm² |
| Embodiment 7 | To both positive and negative pole catalyst slurries, polybenzimidazole solution with mass concentration of 15% was added | Phosphoric acid solution | When the temperature of the cell was 150 °C, and the voltage was 0.60 V, the current density was 580 mAh/cm²; when the temperature of the cell was 160 °C, and the voltage was 0.61 V, the current density was 700 mAh/cm² |
| Embodiment 8 | To both positive and negative pole catalyst slurries, ethanol and polybenzimidazole solution with mass concentration of 15% were added | Potassium hydroxide solution | When the temperature of the cell was 80 °C, and the voltage was 0.60 V, the current density was 200 mAh/cm² |
| Embodiment 9 | To both positive and negative pole catalyst slurries, ethanol and polybenzimidazole solution with mass concentration of 10% were added | Phosphoric acid solution | When the temperature of the cell was 150 °C, and the voltage was 0.60 V, the current density was 760 mAh/cm² |
| Embodiment 10 | To both positive and negative pole catalyst slurries, ethanol and polybenzimidazole solution with mass concentration of 20% were added | Phosphoric acid solution | When the temperature of the cell was 150 °C, and the voltage was 0.60 V, the current density was 800 mAh/cm² |
| Embodiment 11 | To the positive pole catalyst slurry, ethanol and polybenzimidazole solution with mass concentration of 15% were added; To the negative pole catalyst slurry, polybenzimidazole solution with mass concentration of 15% was not added | The positive pole was soaked in phosphoric acid solution, and the negative pole was not soaked | When the temperature of the cell was 120 °C, and the voltage was 0.60 V, the current density was 630 mAh/cm² |

From Table 2, it can be seen that the methods provided in Embodiments 6-11 can all obtain the electrode assemblies that do not need to use the conventional proton exchange membrane, and the electrode assemblies prepared by the methods provided in Embodiment 9 and Embodiment 10 have better discharging effect.

### Embodiment 12

### Preparation of positive pole:

0.02 g of 60 wt% platinum-carbon catalyst was weighed into a beaker, then 2 g of ultrapure water was added, and the resultant was stirred in an emulsifying stirrer, wherein a stirring rotational speed was 2000 rpm, and an emulsifying period was 20 min. 3 g of isopropyl alcohol and 2.5 g of 60% PTFE emulsion were added continuously, after the addition was completed, the resultant was stirred and emulsified, wherein a stirring rotational speed was controlled at 10000 rpm.

1 g of ammonium bicarbonate was weighed into a beaker, 5 g of ultrapure water was added to the beaker, and then the resultant was stirred in a magnetic stirrer for 30 min to obtain an ammonium bicarbonate solution with mass concentration of 20%. 2 g of the ammonium bicarbonate solution was weighed and added to the above slurry, and then the resultant was subjected to ultrasonic oscillation in an ultrasonic apparatus for 120 min to obtain a catalyst slurry.

Carbon fiber paper was used as a positive pole diffusion layer. First, the carbon fiber paper was cut into a rectangular shape of 5 cm x 6 cm, and placed on a heating platform for heating at a heating temperature of 100 °C. Then, the formulated catalyst slurry was uniformly sprayed onto carbon fiber paper, and cured at a temperature of 140 °C for 100 min after the spraying was completed, to obtain an electrode.

5 g of perfluorosulfonic acid resin was weighed into a beaker, 95 g of isopropyl alcohol was added to the beaker, and the resultant was stirred in a magnetic stirrer for 100 min to obtain a perfluorosulfonic acid resin solution.
The sprayed electrode was impregnated in the perfluorosulfonic acid resin solution for 20 h, and then the electrode was taken out and dried in a condition of 160 °C to obtain a positive pole of the cell.

### Preparation of negative pole:

0.01 g of 60 wt% platinum-carbon catalyst was weighed into a beaker, then 1 g of ultrapure water was added to the beaker, and the resultant was stirred in an emulsifying stirrer to obtain a slurry, wherein a stirring rotational speed was 2000 rpm, and an emulsifying period was 20 min. 1.5 g of isopropyl alcohol and 1.5 g of 60% PTFE emulsion were added continuously, after the addition was completed, the resultant was stirred and emulsified, wherein a stirring rotational speed was controlled at 10000 rpm.

0.5 g of ammonium bicarbonate was weighed into a beaker, 2.5 g of ultrapure water was added to the beaker, and then the resultant was stirred in a magnetic stirrer for 30 min to obtain an ammonium bicarbonate solution with mass concentration of 20%. 1 g of the ammonium bicarbonate solution was weighed and added to the above slurry, and then the resultant was subjected to ultrasonic oscillation in an ultrasonic apparatus for 120 min to obtain a catalyst slurry.

Carbon fiber paper was used as a negative pole diffusion layer. First, the carbon fiber paper was cut into a rectangular shape of 5 cm x 6 cm, and placed on a heating platform for heating at a heating temperature of 100 °C. Then, the formulated catalyst slurry was uniformly sprayed onto carbon fiber paper, and dried at a temperature of 140 °C for 100 min after the spraying was completed, to obtain an electrode.

2.5 g of perfluorosulfonic acid resin was weighed into a beaker, 47.5 g of isopropyl alcohol was added to the beaker, and the resultant was stirred in a magnetic stirrer for 100 min to obtain a perfluorosulfonic acid resin solution. The sprayed electrode was impregnated in the perfluorosulfonic acid resin solution for 20 h, and then the electrode was taken out and dried in a condition of 160 °C to obtain a negative pole of the cell.

### Preparation of electrode assembly:

The prepared electrode was cut into a rectangular shape of 2.5 cm x 5 cm, and then the positive and negative pole plates were bonded together and hot pressed, wherein a hot pressing temperature was 120 °C, hot pressing period was 200 s, and pressure was 2 MPa.

### Discharging performance test:

The pressed positive and negative poles were stuck to the gas guide groove with silica gel, and hydrogen was introduced into the negative pole, wherein the hydrogen pressure was 0.3 MPa; the positive pole was supplied with oxygen by air. The cell was activated first, then the activated cell was subjected to a discharging test, and when the temperature of the cell was 60 °C, and the voltage was 0.61 V, the current density was 560 mAh/cm²; and when the temperature of the cell was 90 °C, and the voltage was 0.65 V, the current density was 610 mAh/cm².

### Embodiment 13

The method provided by the present embodiment is consistent with the method of Embodiment 12, and the differences lie in the following.

### Preparation of positive pole:

5 g of polybenzimidazole was weighed into a beaker, 95 g of dimethylacetamide was added to the beaker, and the resultant was stirred in a magnetic stirrer for 100 min to obtain a polybenzimidazole solution. The sprayed electrode was impregnated in the polybenzimidazole solution for 20 h, then the electrode was taken out and dried in a condition of 160 °C, then put in a phosphoric acid solution to be soaked for 20 h, and then dried to obtain a positive pole of the cell.

### Preparation of negative pole:

2.5 g of polybenzimidazole was weighed into a beaker, 47.5 g of dimethylacetamide was added to the beaker, and the resultant was stirred in a magnetic stirrer for 100 min to obtain a polybenzimidazole solution. The sprayed electrode was impregnated in the polybenzimidazole solution for 20 h, then the electrode was taken out and dried in a condition of 160 °C, then put in a phosphoric acid solution to be soaked for 20 h, and then dried to obtain a negative pole of the cell.

### Embodiment 14

The method provided by the present embodiment is consistent with the method of Embodiment 12, except that ammonium bicarbonate solution was not added to the slurry.

### Embodiment 15

The method provided by the present embodiment is consistent with the method of Embodiment 12, except that the mass concentration of the perfluorosulfonic acid resin solution was 10%.

Embodiments 12-15 are summarized as in Table 3.

**Table 3 Preparation Method and Discharging Performance of Electrode Assembly**

| | Catalyst Slurry | Polymer Electrolyte Solution for Soaking | Discharging Performance Test |
|---|---|---|---|
| Embodiment 12 | To both positive and negative pole catalyst slurries, isopropyl alcohol, PTFE emulsion, and ammonium bicarbonate were added | Soaked in perfluorosulfonic acid resin solution with mass concentration of 5% | When the temperature of the cell was 60 °C, and the voltage was 0.61 V, the current density was 560 mAh/cm²; when the temperature of the cell was 90 °C, and the voltage was 0.65 V, the current density was 610 mAh/cm² |
| Embodiment 13 | To both positive and negative pole catalyst slurries, isopropyl alcohol, PTFE emulsion, and ammonium bicarbonate were added | First soaked in polybenzimidazole solution with mass concentration of 5%, and then soaked in phosphoric acid solution | When the temperature of the cell was 160 °C, and the voltage was 0.62 V, the current density was 550 mAh/cm² |
| Embodiment 14 | To both positive and negative pole catalyst slurries, isopropyl alcohol and PTFE emulsion were added | Soaked in perfluorosulfonic acid resin solution with mass concentration of 5% | When the temperature of the cell was 80 °C, and the voltage was 0.63 V, the current density was 810 mAh/cm² |
| Embodiment 15 | To both positive and negative pole catalyst slurries, isopropyl alcohol, PTFE emulsion, and ammonium bicarbonate were added | Soaked in perfluorosulfonic acid resin solution with mass concentration of 10% | When the temperature of the cell was 45 °C, and the voltage was 0.60 V, the current density was 660 mAh/cm² |

From Table 3, it can be seen that the methods provided in Embodiments 12-15 can all obtain the electrode assemblies that do not need to use the conventional proton exchange membrane, and the electrode assembly prepared by the method provided in Embodiment 14 has better discharging effect.

The embodiments described above are only some embodiments of the present disclosure, rather than all embodiments. The detailed description of the embodiments of the present disclosure is not intended to limit the scope of the present disclosure claimed, but merely illustrates chosen embodiments of the present disclosure. All of other embodiments obtained by those ordinarily skilled in the art based on the embodiments in the present disclosure without using any creative efforts shall fall within the scope of protection of the present disclosure.

## Claims

1. An electrode assembly for a fuel cell without a proton exchange membrane, **characterized by** comprising:
a polymer electrolyte layer;
a negative pole catalyst layer and a positive pole catalyst layer located on two surfaces of the polymer electrolyte layer; and
a negative pole diffusion layer located on the negative pole catalyst layer away from the polymer electrolyte layer, and a positive pole diffusion layer located on the positive pole catalyst layer away from the polymer electrolyte layer,
wherein a material of the polymer electrolyte layer only contains polymer electrolyte.

2. The electrode assembly for a fuel cell without a proton exchange membrane according to claim 1, wherein the polymer electrolyte layer comprises at least one of a perfluorosulfonic acid resin, a perfluorocarboxylic acid resin, a sulfonated polyether ether ketone resin, a sulfonated polysulfone resin, and a polybenzimidazole soaked in an acid liquid or an alkali liquid.

3. The electrode assembly for a fuel cell without a proton exchange membrane according to claim 1, wherein a thickness of the polymer electrolyte layer is 1-10 µm; and a thickness of the electrode assembly for a fuel cell is less than 200 µm.

4. The electrode assembly for a fuel cell without a proton exchange membrane according to any one of claims 1-3, wherein the negative pole catalyst layer or/and the positive pole catalyst layer comprise a polymer electrolyte material and a catalyst active material, and the polymer electrolyte material is consistent with the polymer electrolyte material in the polymer electrolyte layer.

5. The electrode assembly for a fuel cell without a proton exchange membrane according to claim 4, wherein a mass ratio of the catalyst active material to the polymer electrolyte material is 1: 0.1-1: 0.5;
optionally, a particle size range of the catalyst active material is 0.1-1 nm, and a particle size range of the polymer electrolyte material is 0.2-5 µm; and
optionally, porosity of the catalyst layer is 10%-90%.

6. The electrode assembly for a fuel cell without a proton exchange membrane according to claim 4, wherein the catalyst active material comprises a noble metal catalyst or/and a metal oxide catalyst, wherein
optionally, the noble metal catalyst comprises at least one of a Pt catalyst, a Pt-based composite catalyst, and a Pt/C catalyst; and
optionally, the metal oxide catalyst comprises at least one of an iridium oxide, a rubidium oxide, and a ruthenium oxide.

7. The electrode assembly for a fuel cell without a proton exchange membrane according to any one of claims 1-3, wherein a material of the negative pole diffusion layer or/and the positive pole diffusion layer is one selected from the group consisting of carbon fiber paper, carbon fiber woven fabric, carbon black paper, foam metal, and nonwoven fabric, wherein
optionally, the foam metal is one selected from the group consisting of foam nickel, foam copper, foam aluminum, foam zinc, and foam titanium; and
optionally, the negative pole diffusion layer and the positive pole diffusion layer are both carbon fiber paper.

8. A fuel cell, **characterized by** comprising a negative pole gas guide groove, a positive pole gas guide groove, and the electrode assembly for a fuel cell without a proton exchange membrane according to any one of claims 1-7 provided between the negative pole gas guide groove and the positive pole gas guide groove.

9. A preparation method for the electrode assembly for a fuel cell without a proton exchange membrane according to any one of claims 1-7, **characterized by** comprising:
forming the positive pole catalyst layer on the positive pole diffusion layer to obtain a positive electrode; forming the negative pole catalyst layer on the negative pole diffusion layer to obtain a negative electrode; and
growing the polymer electrolyte layer on the positive pole catalyst layer or/and the negative pole catalyst layer; and
compounding the positive electrode and the negative electrode so that the polymer electrolyte layer is located between the positive pole catalyst layer and the negative pole catalyst layer.

10. The preparation method according to claim 9, wherein a polymer electrolyte resin layer is formed while forming the positive pole catalyst layer on the positive pole diffusion layer to obtain the positive electrode; or/and
a polymer electrolyte resin layer is formed while forming the negative pole catalyst layer on the negative pole diffusion layer to obtain the negative electrode; and
the positive electrode and the negative electrode are compounded so that the polymer electrolyte resin layer is located between the positive pole catalyst layer and the negative pole catalyst layer.

11. The preparation method according to claim 10, wherein a preparation method for the positive electrode or/and the negative electrode comprises:
mixing a catalyst active material, a catalyst solvent, and a polymer electrolyte resin to obtain a catalyst slurry; and
coating the catalyst slurry on a surface of the diffusion layer and curing,
so that a catalyst layer close to the diffusion layer and the polymer electrolyte resin layer away from the diffusion layer are formed on the diffusion layer;
optionally, the polymer electrolyte resin comprises at least one of a perfluorosulfonic acid resin, a perfluorocarboxylic acid resin, a sulfonated polyether ether ketone resin, and a sulfonated polysulfone resin; and
optionally, a mass concentration of the polymer electrolyte resin in the catalyst slurry is 2%-20%, a mass concentration of the catalyst active material in the catalyst slurry is 5%-45%, and a mass ratio of the catalyst active material to the polymer electrolyte resin is 1: 0.2-1: 0.5.

12. The preparation method according to claim 11, wherein the catalyst slurry further comprises a high boiling point solvent, and a boiling point of the high boiling point solvent is greater than a boiling point of the catalyst solvent;
optionally, the catalyst solvent comprises at least one of isopropyl alcohol, ethanol, methanol, and propanol, and the high boiling point solvent comprises ethylene glycol or glycerol;
optionally, the catalyst slurry further comprises a pore forming agent;
optionally, the pore forming agent comprises at least one of ammonium acetate, ammonium sulfate, and ammonium bicarbonate; and
optionally, a mass ratio of the catalyst active material to the high boiling point solvent and the pore forming agent is 1: (0.1-3): (0.1-0.33).

13. The preparation method according to claim 9, wherein a porous polymer layer is formed while forming the positive pole catalyst layer on the positive pole diffusion layer to obtain the positive electrode; or/and
a porous polymer layer is formed while forming the negative pole catalyst layer on the negative pole diffusion layer to obtain the negative electrode;
the porous polymer layer is soaked in an acid liquid or an alkali liquid, and then dried to form the polymer electrolyte layer; and
the positive electrode and the negative electrode are compounded so that the polymer electrolyte layer is located between the positive pole catalyst layer and the negative pole catalyst layer, wherein
optionally, the acid liquid is a phosphoric acid solution, a sulfuric acid solution, a hydrochloric acid solution, or a nitric acid solution;
optionally, a mass concentration of the acid liquid is 5%-15%;
optionally, the alkali liquid is a sodium hydroxide solution or/and a potassium hydroxide solution; and
optionally, a mass concentration of the alkali liquid is 5%-15%.

14. The preparation method according to claim 13, wherein a preparation method for the positive electrode or/and the negative electrode comprises:
mixing a catalyst active material, a catalyst solvent, and a porous polymer to obtain a catalyst slurry; and
coating the catalyst slurry on a surface of the diffusion layer, and drying the catalyst slurry to form on the diffusion layer the catalyst layer close to the diffusion layer and the porous polymer layer away from the diffusion layer, wherein
optionally, the porous polymer comprises polybenzimidazole; and
optionally, a mass concentration of the porous polymer in the catalyst slurry is 2%-20%, a mass concentration of the catalyst active material in the catalyst slurry is 5%-45%, and a mass ratio of the catalyst active material to the porous polymer is 1: 0.2-1: 0.5.

15. The preparation method according to claim 14, wherein the catalyst slurry further comprises a high boiling point solvent, and a boiling point of the high boiling point solvent is greater than a boiling point of the catalyst solvent;
optionally, the catalyst solvent comprises at least one of isopropyl alcohol, ethanol, methanol, and propanol, and the high boiling point solvent comprises ethylene glycol or glycerol;
optionally, the catalyst slurry further comprises a pore forming agent; optionally, the pore forming agent comprises at least one of ammonium acetate, ammonium sulfate, and ammonium bicarbonate; and
optionally, a mass ratio of the catalyst active material to the high boiling point solvent and the pore forming agent is 1: (0.1-3): (0.1-0.33).

16. The preparation method according to claim 9, wherein the positive pole catalyst layer is formed on the positive pole diffusion layer to obtain the positive electrode, and the negative pole catalyst layer is formed on the negative pole diffusion layer to obtain the negative electrode;
the catalyst layer of the positive electrode or/and the negative electrode is soaked in a polymer electrolyte resin solution, and dried to form a polymer electrolyte resin layer on the catalyst layer; and
the positive electrode and the negative electrode are compounded so that the polymer electrolyte resin layer is located between the positive pole catalyst layer and the negative pole catalyst layer, wherein
optionally, a mass concentration of the polymer electrolyte resin solution is 3%-10%; and
optionally, the polymer electrolyte resin comprises at least one of a perfluorosulfonic acid resin, a perfluorocarboxylic acid resin, a sulfonated polyether ether ketone resin, and a sulfonated polysulfone resin.

17. The preparation method according to claim 9, wherein the positive pole catalyst layer is formed on the positive pole diffusion layer to obtain the positive electrode, and the negative pole catalyst layer is formed on the negative pole diffusion layer to obtain the negative electrode;
the catalyst layer of the positive electrode or/and the negative electrode is soaked in a porous polymer solution, and dried to form a porous polymer layer on the catalyst layer;
the porous polymer layer is soaked in an acid liquid or an alkali liquid, and dried to form the polymer electrolyte layer; and
the positive electrode and the negative electrode are compounded so that the polymer electrolyte layer is located between the positive pole catalyst layer and the negative pole catalyst layer, wherein
optionally, a mass concentration of the porous polymer solution is 3%-10%;
optionally, the porous polymer is polybenzimidazole;
optionally, the acid liquid is a phosphoric acid solution, a sulfuric acid solution, a hydrochloric acid solution, or a nitric acid solution;
optionally, a mass concentration of the acid liquid is 5%-15%;
optionally, the alkali liquid is a sodium hydroxide solution or/and a potassium hydroxide solution; and
optionally, a mass concentration of the alkali liquid is 5%-15%.

18. The preparation method according to claim 16 or 17, wherein a preparation method for the positive electrode or/and the negative electrode comprises:
mixing a catalyst active material, a catalyst solvent, and a hydrophobic polymer to obtain a catalyst slurry; and
coating the catalyst slurry on a surface of the diffusion layer, and drying the catalyst slurry to form on the diffusion layer the catalyst layer and the polymer electrolyte layer, wherein
optionally, the hydrophobic polymer is PTFE emulsion or dimethyl silicone oil; and
optionally, a mass concentration of the hydrophobic polymer in the catalyst slurry is 2%-20%, a mass concentration of the catalyst active material in the catalyst slurry is 5%-45%, and a mass ratio of the catalyst active material to the hydrophobic polymer is 1: 0.2-1: 0.5.

19. The preparation method according to claim 18, wherein the catalyst slurry further comprises a pore forming agent, wherein
optionally, the pore forming agent comprises at least one of ammonium acetate, ammonium sulfate, and ammonium bicarbonate; and
a mass ratio of the catalyst active material to the pore forming agent is 1: 0.1-1: 0.33.
